# EUROPEAN PATENT APPLICATION

(11) **EP 4 813 862 A1**
(43) Date of publication of application: **30.09.2026**
(21) Application number: 25193316.4
(22) Date of filing: 01.08.2025
(51) Int. Cl.: B65D 53/04, B32B 3/26, B32B 3/30, B32B 5/18, B32B 7/05, B32B 7/12, B32B 27/06, B32B 27/32, B32B 27/34, B32B 27/36, B65D 77/20

(54) **CONTAINER SEALING LINER WITH OPENING TAB**

(30) Priority: 26.03.2025 KR 20250038894
(71) Applicant: Seal and Pack Co., Ltd., Daewol-myeon Icheon-si, Gyeonggi-do 17343 (KR)
(72) Inventor: WEI, Se Hwang, 16822 Yongin-si, Gyeonggi-do (KR)
(74) Representative: Jung, Minkyu

(57) **Abstract**

The present disclosure relates to a container sealing liner that allows a user to easily open a sealed container with little effort and allows maintaining a sealing function and structural stability. An embodiment of the present disclosure provides a container sealing liner comprising: a first layer for sealing an opening of a container, part of one surface of which is attached to the container; and a second layer attached to the other surface of the first layer, wherein the second layer comprises an attached area that is attached to the first layer and a non-attached area.

## Description

### FIELD OF TECHNOLOGY

The present disclosure relates to a container sealing liner, and more particularly, to a container sealing liner that allows a user to easily open a sealed container with little effort and allows maintaining a sealing function and structural stability.

### BACKGROUND

Conventional container sealing liners are designed to be separated from containers by a user pulling the sealing liners when opening containers. However, there are many problems due to structural limits. In a case where a handle is designed to be small, a user is required to exert excessive force or containers may frequently fail to open properly due to damage to the sealing liners. In particular, a design for strong sealing between a sealing liner and a container hinders easy opening by a user. For this reason, the increase of the sealing strength has a limit.

In a structure in which a handle is located in the center, since a membrane layer is outwardly exposed, the structure has a limit in an aesthetic aspect and in utilization of printing area. A structure, in which force separating a sealing liner from an opening surface of a container is dispersed in both directions of an opening of the sealing liner, requires a lot of force when removing the sealing liner, which is inefficient. For this reason, such a design causes a user to fail to properly open the sealing liner or causes a partial damage to the sealing liner. As such, conventional container sealing liners are required to be improved in various aspect, such as convenience in use, structural stability, production efficiency, or the like.

The discussions in this section are intended merely to provide background information and do not constitute an admission of prior art.

### SUMMARY

The present disclosure is intended to provide a container sealing liner that allows a user to easily open a container with little effort and allows maintaining a sealing function and structural stability.

In an aspect, the present disclosure provides a container sealing liner comprising: a first layer for sealing an opening of a container, part of one surface of which is attached to the container; and a second layer attached to the other surface of the first layer, wherein the second layer comprises an attached area that is attached to the first layer and a non-attached area.

The container sealing liner may be formed in various shapes, such as a circle, an oval, a polygon, or the like, wherein the shape is not limited to any particular form.

The non-attached area of the second layer may be coated with ultraviolet-curable silicone resin (UV resin).

The non-attached area of the second layer may include a partially attached area, which is part of the non-attached area of the second layer that is not coated with ultraviolet-curable silicone resin so as to be attached to the first layer.

The second layer may include a cutting line formed inwardly from a specific point on an edge of the second layer and a cutting guide line formed from the end point of the cutting line.

The cutting line may include a first cutting line formed from the outermost line of the second layer toward the center or in an inward direction, either straight or curved.

The cutting line may include a second cutting line connected to the end point of the first cutting line and formed at an angle of 90° to 150° with respect to the first cutting line.

The cutting line may include a second cutting line connected to the end point of the first cutting line and formed at an angle of 135° with respect to the first cutting line.

The cutting line may include a third cutting line connected to the end point of the second cutting line and formed in the same direction as the direction in which the first cutting line and the second cutting line run.

The cutting guide line may include a first cutting guide line formed in the non-attached area and a second cutting guide line formed in the attached area.

The first cutting guide line may be connected to the end point of the third cutting line, and may be formed as a curved line bent in a direction opposite to the direction in which the second cutting line and the third cutting line run.

The second cutting guide line may be connected to the end point of the first cutting guide line and may be formed as a curved line bent in the same direction as the direction in which the first cutting guide line is bent.

The second cutting guide line may take the end point of the first cutting guide line as a starting point and may take a point spaced a predetermined distance from the first cutting guide line as an end point.

The distance between the second cutting guide line and the edge of the second layer closest to the second cutting guide line becomes gradually closer from the starting point to a certain point and becomes gradually farther from that point to the end point.

The distance between the second cutting guide line and the edge of the second layer closest to the second cutting guide line may become gradually closer from the starting point to a first point, remain at a consistent distance from the first point to a second point, and become gradually farther from the second point to the end point.

The first layer may be made of aluminum having a thickness of 15 to 50 µm.

The first layer may include a sealing layer to be attached to the container.

The second layer may include a printing layer formed of at least one of polyethylene terephthalate (PET), biaxially oriented polypropylene (BOPP), polyolefin film, nylon film, and synthetic paper, and a rigid film layer formed of at least one of polyester film, high-density polyethylene (HDPE) film, cast polypropylene (CPP) film, and nylon film.

The second layer may further include a foam layer formed of a foamed olefin resin film or sheet obtained by foaming a polyolefin resin.

The sealing layer may include a linear or V-shaped laser marker to guide cutting of the sealing layer.

In a case where the laser marker is linear, one end may be connected to the starting point, and in a case where the laser marker is V-shaped, the apex of the V may be connected to the starting point.

The present disclosure provides a container sealing liner with improved use convenience by optimizing the operating direction of force and the structure of the sealing liner to enable a user to easily remove the container sealing liner even with little effort, and improved ease of manufacture by omitting the scrap removal process. In addition, according to the present disclosure, since a membrane layer is not exposed to the outside, aesthetic quality is enhanced, and since the upper layer of the membrane layer is made of a second layer, which is a backing layer with multiple layers including elastic polyolefin foam, when a cap is engaged with a container, adhesion is enhanced so that the sealing strength may be significantly increased and structural stability and reliability can be maintained.

### BRIEF DESCRIPTION OF THE DRAWINGS

In order for one having ordinary skill in the art to understand the present disclosure, various forms of the present disclosure are described given by way of example with reference to the accompanying drawings, in which:
FIG. 1 is a configuration diagram of a container sealing liner according to an embodiment of the present disclosure;
FIGS. 2A, 2B, and 3 are exemplary diagrams for illustrating a second layer according to an embodiment of the present disclosure;
FIG. 4 is a configuration diagram of layers of a container sealing liner according to an embodiment of the present disclosure;
FIG. 5 is an exemplary diagram for illustrating a laser marker according to an embodiment of the present disclosure; and
FIGS. 6A and 6B are exemplary diagrams for illustrating a laser marker and a non-attached area according to an embodiment of the present disclosure.

### DETAILED DESCRIPTION

Hereinafter, embodiments of the present disclosure are described in detail in reference to accompanying drawings. In describing the present invention, detailed descriptions of well-known functions or configurations that may unnecessarily obscure the gist of the present invention will be omitted. In addition, the terms described below are defined in consideration of the functions of the present invention and may vary depending on the intention or custom of a user or an operator. Therefore, the definitions should be made based on the overall content of this specification.

Hereinafter, embodiments of the present disclosure are described in detail in reference to accompanying drawings.

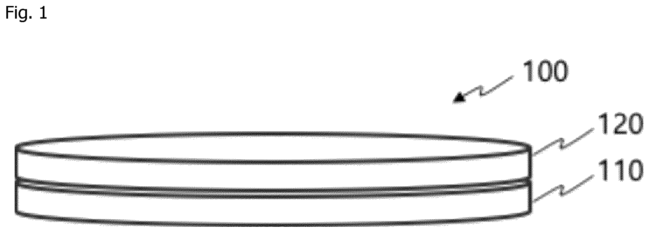

FIG. 1 is a configuration diagram of a container sealing liner according to an embodiment of the present disclosure.

According to an embodiment, a container sealing liner 100 may comprise a first layer 110 for sealing an opening of a container, part of a lower surface of which is attached to the container; and a second layer 120 attached to the first layer 110 and the upper surface of the first layer 110.

For example, the container sealing liner 100 is used for sealing a container, and is designed to allow easy removal thereof even with minimal effort by adjusting the direction in which force operates. The container sealing liner 100 is, in particular, excellent in aesthetic aspects by preventing a membrane layer, which is the first layer, from being exposed to the outside, and has a design advantage in which a wide printing area may be utilized.

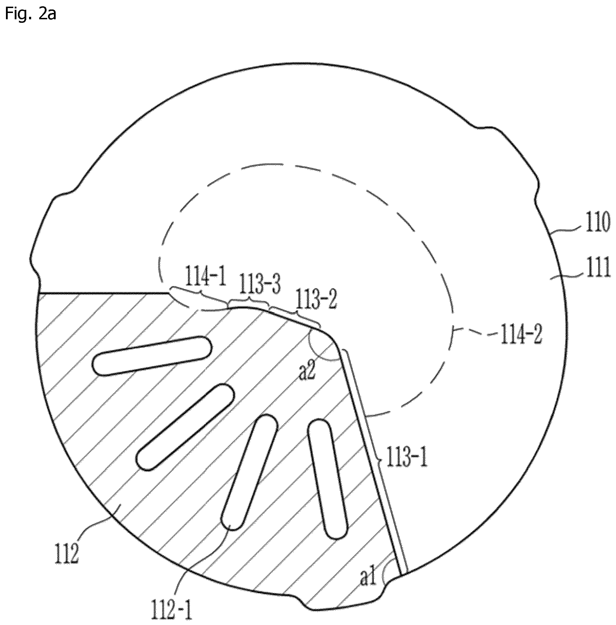

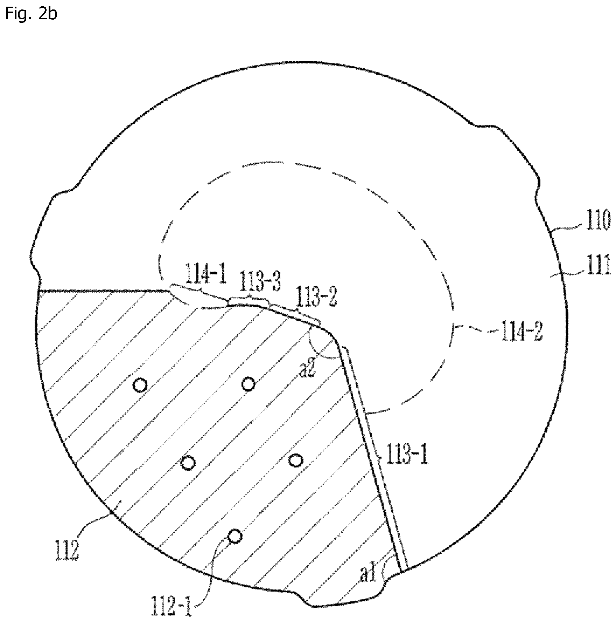

According to an embodiment, the second layer may comprise an attached area that is attached to the first layer and a non-attached area that is not attached to the first layer. Referring to FIG. 2, the attached area 111 is solidly coupled to the first layer. When a user opens a container, the attached area may allow a force upwardly pulling the second layer to be exerted to the first layer so that the first layer may be broken in an area of a second cutting guide line, whereby both the first layer and the second layer may be separated from an opening surface of the container along a third cutting guide line.

The non-attached area 112, in which the first layer and the second layer are kept unattached, may serve as a handle that a user can easily grasp. The non-attached area is an important part that starts removal of the sealing liner. When a user pulls this area, the force for removing the sealing liner may be transferred to the second layer. When a user pulls the non-attached area, the attached area of the second layer moves together with the first layer, and this process enables the gradual release of attachment between the first layer and the container. Consequently, the container sealing liner 110 may be completely separated from the container in a single continuous action. As such, the container sealing liner 100 may maintain a strong sealing while minimizing the force required for removal thereof.

According to an embodiment, the non-attached area of the second layer may be coated with ultraviolet-curable silicone resin (UV resin). Ultraviolet-curable silicone resin, which is a polymeric material that is rapidly cured by ultraviolet light, may provide specific physical or chemical properties to a surface. When the non-attached area of the second layer is coated with ultraviolet-curable silicone resin, this area is not attached to the first layer.

When ultraviolet-curable silicone resin is coated on the non-attached area, the non-attached area is not attached to the first layer due to the heterogeneous surface properties of the resin-cured surface. That is because of an inactive surface, which is a major property of ultraviolet-curable silicone resin. That is, it is because an adhesive cannot be sufficiently bonded to an area coated with resin due to the low surface energy. Since the adhesive is restricted from adhering to and coupling with the resin-cured surface, the first layer and the second layer cannot be attached, thereby remaining unattached.

The ultraviolet-curable resin coating may improve the durability of the non-attached area. Since a resin-coated layer may be resistant to physical damage or abrasion, when a user pulls the corresponding area as a handle, this area may serve as an opening tab of the sealing liner without any damage. That is, the ultraviolet-curable resin coating may prevent the coupling with an adhesive in the non-attached area as well as improve the durability of the non-attached area.

According to an embodiment, the non-attached area of the second layer may include a partially attached area 112-1, which is part of the non-attached area of the second layer that is not coated with ultraviolet-curable silicone resin, and thus, is attached to the first layer. The partially attached area may be designed to maintain the stability of the non-attached area and to enable the sealing liner to smoothly operate its function.

The non-attached area is not attached to the first layer, and thus, it serves as a handle. However, since this area is not completely fixed, when a lid is rotated, this area may be pushed or bent according to the movement of the lid. This may reduce the structural consistency of the sealing liner, which may affect the function and reliability of the sealing liner. In order to prevent such problems, part of the non-attached area may be formed in the form of multiple dots, lines, or oblique lines to be partially attached to the first layer.

FIG. 2A shows an embodiment in which the partially attached area 112-1 is formed in straight lines, and FIG. 2B shows an embodiment in which the partially attached area 112-1 is formed in dots.

Since the partially attached area 112-1 is excluded from the ultraviolet-curable silicone resin coating, this area may be efficiently bonded to the first layer by adhesive so that the non-attached area can be securely fixed. This prevents the non-attached area from being bent or deformed when the lid is rotated or manipulated, whereby the container sealing liner may maintain consistent functionality and convenience in use. That is, the partially attached area may maintain a balance between the non-attached area and the attached area so that the non-attached area may serve as a handle and prevent the instability of the non-attached area due to the rotation of the lid or external force.

According to an embodiment, the second layer may include a cutting line formed inwardly from a specific point on an edge of the second layer and a cutting guide line formed from the end point of the cutting line. Referring to FIGS. 2A and 2B, the second layer 120 may include cutting lines 113-1 ~ 113-3 and cutting guide lines 114-1, 114-2. Such a structure enables easy opening of the sealing liner and enhances convenience for a user.

The cutting line, which is a line that starts from the edge of the second layer and is formed inwardly, provides an initial fracture point when removing the sealing liner. The cutting line may generally be formed by a sealing knife, and have a relatively low strength so that a user can easily cut the line. This line may enable a user to fracture the sealing liner with the minimum required force when removing the sealing liner, while the sealing strength for the container is maintained.

The cutting guide line, which is a line extending from the end point of the cutting line and is formed inwardly, serves to guide the cutting direction of the sealing liner. The cutting guide line is designed to naturally extend the fracture that initiates from the cutting line in a desired direction when a user opens the sealing liner. For example, the cutting guide line may be formed as a dotted line, like a cutting line using a needle cut method so that the cutting guide line can be easily fractured when a user opens the container.

According to an embodiment, the cutting line may include a first cutting line 113-1 formed in a straight or curved line from the outermost line of the second layer toward the center or in an inward direction. The first cutting line 113-1 may be formed from a specific point of the second layer 110. In particular, the first cutting line 113-1 may be formed at an angle a1 of 75° to 105° with respect to a tangent line that passes through the specific point of the edge of the second layer. Such a structure may provide an optimum cutting direction to facilitate opening of the sealing liner.

The first cutting line 113-1 inwardly enters from the edge of the second layer, and maintains the angle a1 with respect to the tangent line within a range of 75° to 105° so as to transfer appropriate force and to guide fracture when a user pulls the handle 113-1. This angle range is determined to support a natural opening operation without damaging the physical structure of the sealing liner.

Specifically, the first cutting line 113-1 serves as a starting point when a user opens the sealing liner, and is formed at an optimum angle so that the cutting direction is not excessively steep or gradual. This is a design in consideration of both the durability of the second layer and user convenience, which allows the cutting line to operate precisely in the desired direction when force is exerted by a user.

According to an embodiment, the cutting line may include a second cutting line 113-2 that is connected to the end point of the first cutting line 113-1 and is formed at an angle of 90° to 150° with respect to the first cutting line. Preferably, the cutting line may include a second cutting line that is connected to the end point of the first cutting line and is formed at an angle of 135° with respect to the first cutting line.

The second cutting line may be connected to the end point of the first cutting line. In particular, the second cutting line 113-2 may be formed at an angle a2 of 90° to 150° with respect to the first cutting line. Such an angle may enable natural cutting guidance in the process of opening the sealing liner and may maximize user convenience.

The reason why the angle a2 between the first cutting line and the second cutting line is set to be in a rage of 90° to 150° is for smooth and efficient switching of the cutting direction. If the angle is less than 90°, a cutting path may be sharply turned, resulting in damages of a cutting portion, or a user may need to exert greater force when opening the sealing liner. On the contrary, if the angle is greater than 150°, the cutting guidance is not clear, resulting in decrease of the efficiency in opening the sealing liner. Accordingly, the angle range of 90° to 150° is an optimum angle designed such that a user can perform smooth opening, while the balance between the strength and cutting guidance of the cutting line. More specifically, the cutting line may include the second cutting line that is connected to the end point of the first cutting line and is formed at an angle of 135° with respect to the first cutting line.

The first cutting line 113-1 and the second cutting line 113-2 may be connected in two ways. A first way is to connect them with a curve, which softens the change in cutting direction, and thus, enables a user to open the sealing liner with little effort. This is suitable to maximize user convenience. A second way is to connect them with a straight line, which has a simple structure and is easy to manufacture. When connecting them with a straight line, the cutting path is clear, which enables stability to be maintained. This may be preferred depending on specific designs and production requirements.

According to an embodiment, the cutting line may include a third cutting line 113-3 that is connected to the end point of the second cutting line 113-2, and is formed in the same direction as the direction in which the first cutting line 113-1 and the second cutting line 113-2 run. The third cutting line 113-3 may be connected to the end point of the second cutting line, and may be formed in the same direction as the direction in which the first cutting line and the second cutting line run. This provides a structural characteristic of easy opening of the sealing liner by maintaining the direction of force applied by a user in the process of cutting.

The third cutting line 113-3 enables force to be continuously transferred when a user pulls the sealing liner. The first cutting line and the second cutting line are responsible for the initial change in direction in cutting and for guidance, and the third cutting line keeps this direction consistent, thereby ensuring the continuity of cutting. This allows a natural operation for tearing the sealing liner by a user without interruption and allows precise and efficient opening of the sealing liner with minimal effort.

According to an embodiment, the cutting guide line may include a first cutting guide line 114-1 formed in the non-attached area and a second cutting guide line 114-2 formed in the attached area. Such a structure enables maintenance of the cutting direction and stability, and prevention of problems that may occur during use when opening the sealing liner.

The first cutting guide line 114-1 is formed in the non-attached area, and plays an important role in maintaining the structural stability of the sealing liner. The non-attached area is prone to deformation when a user pulls a handle or rotates the lid, and the first cutting guide line may absorb stress that occurs during such a process and serve as a primary resistance. This allows prevention of unnecessary tearing or damage of the first layer.

The second cutting guide line 114-2 is formed in the attached area, and plays a main role in guiding opening of the sealing liner. The second cutting guide line may control the cutting direction such that the opening may precisely proceed in a state where the first layer and the second layer are bonded. When a user pulls the handle, cutting proceeds sequentially along the structure of the cutting guide line to naturally separate the sealing liner from the container. The second cutting guide line, in particular, controls the direction of stress generated in the attached area so that the sealing liner may be appropriately opened without excessive effort. That is, the first cutting guide line may prevent abnormal damage due to deformation and stress during use, and the second cutting guide line may provide the cutting direction in the process of opening to support efficient and stable opening of the sealing liner.

According to an embodiment, the first cutting guide line may be connected to the end point of the third cutting line, and may be formed as a curved line bent in a direction opposite to the direction in which the second cutting line and the third cutting line run. This allows force to be naturally transferred along the edge when a user opens the sealing liner, so that the first layer may smoothly separate from the container.

The reason why the first cutting guide line 114-1 is bent in a curved form is to enable force to be transferred along a consistent and guided path when opening the sealing liner. In a case where the cutting guide line is a straight line or is formed in the wrong direction, the force with which a user pulls the handle cannot be uniformly transferred to the first layer, resulting in abnormal damage to the handle or sealing liner or the need for excessive force. However, a design, in which the first cutting guide line is curved in the direction opposite to the direction in which the second cutting line and the third cutting line run, allows a force transmission path to naturally form along the edge, resulting in a smooth separation of the sealing liner.

In particular, the curvature of the first cutting guide line enables the change in force direction to be smooth to minimize unnecessary resistance during opening. This allows the sealing liner to separate from the container without excessive stress enabling a user to efficiently remove the sealing liner even with little effort. Such a design prevents structural damage to the first layer and maintains the durability of the sealing liner.

According to an embodiment, the second cutting guide line may be connected to the end point of the first cutting guide line and may be formed as a curved line bent in the same direction as the direction in which the first cutting guide line is bent. This enables force to be uniformly and stably transferred along the edge when a user opens the sealing liner, so that the sealing liner may efficiently separate from the container.

The second cutting guide line 114-2, which is connected to the first cutting guide line, may be formed in a circular shape to be smoothly curved in the same running direction as that of the first cutting guide line and to be spaced a predetermined distance from the edge. This structure is for stable transmission of force from the starting point of the attached area to the end point on the opposite side so as to naturally release the bond between the sealing liner and the container. In particular, the direction of the curved line and the structural arrangement along the edge optimizes the force transmission path so that a user may easily remove the container sealing liner even with little effort.

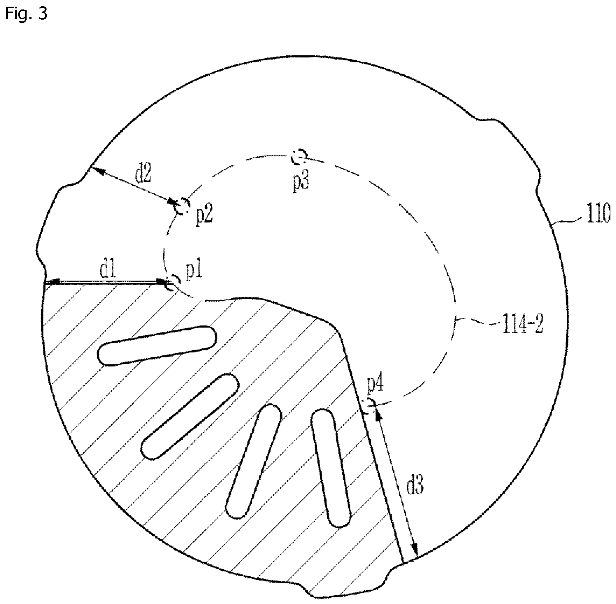

According to an embodiment, the second cutting guide line may take the end point of the first cutting guide line as a starting point and may take a point that is spaced a predetermined distance from the first cutting line as an end point. Referring to FIG. 3, the second cutting guide line may take the end point of the first cutting guide line as a starting point p1 and may take a point that is spaced a predetermined distance from the first cutting line as an end point p4. The curvature of the second cutting guide line may prevent abnormal fracture or force dispersion that may occur during opening the sealing liner, while maintaining the continuity of the cutting direction. Smooth transmission of force along the cutting guide line enables efficient separation of the entire attached area and stable release of adhesion between the sealing liner and the container. That is, a design in which the second cutting guide line 114-2 is connected to the end point of the first cutting guide line and formed in a curved shape to be bent in the same direction in which the first cutting guide line runs, allows stable transmission of force from the starting point of the attached area to the end point on the opposite side.

According to an embodiment, the distance between the second cutting guide line and the edge of the second layer closest to the second cutting guide line becomes gradually closer from the starting point to a certain point and becomes gradually farther from that point to the end point. Referring to FIG. 3, in the container sealing liner 100, the distance between the second cutting guide line 114-2 and the edge of the second layer closest to the second cutting guide line may be designed to become gradually closer from the starting point p1 to a certain point p2 and to become gradually farther from that point p2 to the end point p4. That is, the distance d2 at the point p2 is shorter than the distance d1 at the starting point p1, and the distance d3 at the end point p4 is longer than the distance d2 at the point p2. This serves to appropriately adjust the concentration and dispersion of force in the process of opening the sealing liner to assist a user in the easy removal of the sealing liner.

The reason why the distance becomes gradually closer from the starting point p1 to the point p2 is to concentrate force when opening the sealing liner. The concentrated force facilitates cutting of the second cutting guide line when a user pulls the handle, resulting in stable initial separation of the first layer. Since the force is concentrated around the edge of the second layer as the distance becomes closer, in particular, the initial fracture process may be efficiently and rapidly achieved.

The reason why the distance becomes gradually farther from the point p2 to the end point p4 is to guide the fractured sealing liner to entirely separate from the container. As the distance becomes farther, the force may be widely dispersed to efficiently operate even to the remaining attached area of the sealing liner. This enables natural separation of the entire sealing liner, and allows force to be uniformly transmitted to the entire attached area, thereby easily removing the sealing liner.

This allows gradual adjustment of the concentration and dispersion of force in the process of opening the sealing liner to support a user in the easy separation of the sealing liner from the container even with little effort. That is, the concentration of force at the starting point p1 facilitates the initial cutting, and the dispersion of force, as the cutting guide line approaches the end point p4, enables the complete removal of the sealing liner from the container.

According to an embodiment, the distance between the second cutting guide line and the edge of the second layer closest to the second cutting guide line may become gradually closer from the starting point to a first point, remain at a consistent distance from the first point to a second point, and become gradually farther from the second point to the end point. Referring to FIG. 3, the distance between the second cutting guide line 114-2 and the edge of the second layer closest to the second cutting guide line may become gradually closer from the starting point p1 to a first point p2, remain at a consistent distance from the first point p2 to a second point p3, and become gradually farther from the second point p3 to the end point p4. Such a structure enables the concentration of force in the initial cutting, the maintenance of stability in an intermediate process, and the dispersion of force at the last to efficiently remove the sealing liner from the container.

According to an embodiment, the first layer may be made of aluminum having a thickness of 15 to 50 µm. An aluminum layer, while being thin, may provide high strength and durability, thereby satisfying both the sealing performance and the protective function of the sealing liner. In particular, a thickness of 15 to 50 µm is an optimum range of thickness that enables a user to easily remove the sealing liner while maintaining the sealing strength of the container. This is a structure designed in consideration of both the function and the use convenience of products.

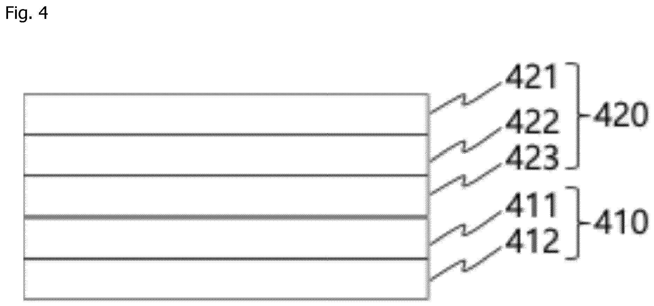

According to an embodiment, the first layer 410 may include a sealing layer to be attached to the container. Referring to FIG. 4, a sealing layer 412 may be designed to provide protection for the contents and a sealing effect by forming a strong bond between the container and the first layer 411, and to enable easy opening by a user when needed.

For example, the sealing layer 412 may have a structure in which an olefin film, a polyethylene terephthalate (PET) film, or both an olefin film and a PET film are laminated.

The olefin film is excellent in chemical resistance and sealability, and thus, enables a strong bond with the container, and leaves minimal residue even after opening, resulting in clean removal. In addition, the olefin film is excellent in flexibility, which enables applications to various containers, and also has a property suitable for heat sealing.

The PET film provides high strength and heat resistance to enhance the durability of the sealing liner and to protect the contents from external environment. In a case where the PET film is used alone or is laminated with the olefin film, this enhances the structural stability of the sealing liner and satisfies specific physical requirements.

A structure in which the olefin film and the PET film are laminated allows the combination of the advantages of the respective films to simultaneously secure the sealing performance, heat resistance, and durability. The olefin film serves to form a strong seal with the container, whereas the PET film provides appropriate tensile resistance by enhancing the strength of the sealing liner and may adjust the ease of opening when needed.

The edge of the sealing layer is an area that is in direct contact with the opening of the container. This area is attached to the container after being heated (heat sealing), which enables the prevention of external air or foreign substances from penetrating and the safe protection of the contents. In addition, the sealing strength may be adjusted to optimize the ease of opening, and various methods of heat sealing may be applied depending on the characteristics of the materials of containers and sealing layers.

According to an embodiment, the second layer 420 may include a printing layer formed of at least one of polyethylene terephthalate (PET), biaxially oriented polypropylene (BOPP), polyolefin film, nylon film, and synthetic paper, and a rigid film layer formed of at least one of polyester film, high-density polyethylene (HDPE) film, cast polypropylene (CPP) film, and nylon film.

Referring to FIG. 4, the second layer 420 may be formed of at least one of the printing layer 421 and the rigid film layer 423. The printing layer 421 may be formed of at least one of polyethylene terephthalate (PET), biaxially oriented polypropylene (BOPP), polyolefin film, nylon film, and synthetic paper. PET provides high transparency and durability and is excellent in printing quality. For this reason, PET is suitable for product information delivery and visual design. BOPP is excellent in flexibility and moisture resistance and has high printing stability, thereby being widely used as a material for packaging. Synthetic paper has printability similar to that of paper and is excellent in waterproofing properties and durability, which are properties that provide resistance to physical damage.

The rigid film layer 423 may be formed of at least one of polyester film, high-density polyethylene (HDPE) film, cast polypropylene (CPP) film, and nylon film. The polyester film is excellent in heat resistance and toughness, and thus, provides physical stability to a sealing liner. The HDPE film, which has a high density, is excellent in strength and chemical resistance, and thus, may be resistant to external impact or damage. The CPP film, which is excellent in thermoplasticity and durability, allows a sealing liner to have both flexibility and stability. The nylon film is excellent in oxygen barrier properties, thereby maintaining freshness of contents and enhancing the stiffness and durability of a sealing liner.

According to an embodiment, the second layer may further include a foam layer formed of a foamed olefin resin film or sheet in which a polyolefin resin is foamed. The second layer 420 may further include a foam layer 422 formed of a foamed olefin resin film or sheet in which a polyolefin resin is foamed. The foam layer 422 may be disposed between the printing layer 421 and the rigid film layer 423 of the second layer and serve to enhance the structural stability and functionality of the sealing liner.

The foam layer 422 has a porous structure formed by foaming a polyolefin resin, which is effective for reducing weight and absorbing impact. Fine pores formed during the foaming process reduce the density of the layer and increase flexibility, which lightens a sealing liner and facilitates its use.

For example, the second layer 420 may not include the foam layer, and this may reduce the entire thickness of the sealing liner. Removing the foam layer enables the sealing liner to have a thin and simple structure, and this enables reduction of weight and the amount of consuming material, thereby reducing production costs. In addition, the reduction in thickness increases the flexibility, which enables designs more suitable for specific shapes of containers or for application environments. As such, whether to include a foam layer depending on applications and purposes is determined and various sealing liners may be implemented.

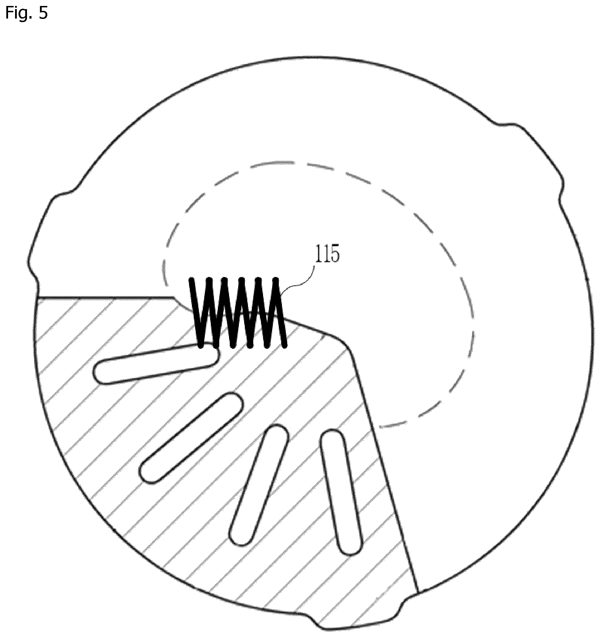

FIG. 5 is an exemplary diagram for illustrating a laser marker according to an embodiment of the present disclosure.

For example, the laser marker is a nick formed in a specific layer to facilitate tearing at a desired location. For example, the sealing layer may include a linear or V-shaped laser marker to guide cutting of the sealing layer. Referring to FIG. 5, the laser marker 115 may be configured in a linear form. The laser marker 115 may be configured in a linear form having a zigzag shape.

For example, when the sealing layer has a thickness of 30 to 50 µm, the depth of the nick of the laser marker may be 10 to 30 µm.

For example, the laser marker serves as an element that adjusts the strength and ease of opening of the sealing layer, and the thickness thereof may vary depending on the toughness of the sealing layer. For example, when the thickness of the container sealing liner is 1T(mm) and the sealing layer has medium toughness, the laser marker may be formed to have a thickness in the range of 10 to 15 µm and adjusted to secure appropriate ease of opening. In addition, when the sealing layer has a high toughness so as not to be easily torn, the thickness of the laser marker may be increased to the range of 20 to 30 µm to facilitate the cutting.

According to an embodiment, in a case where the laser marker is linear, one end may be connected to the starting point p1, and in a case where the laser marker is V-shaped, the apex of the V may be connected to the starting point p1. That is, the connection between the laser marker and the starting point p1 where a fracture starts enables the ease of opening by a user.

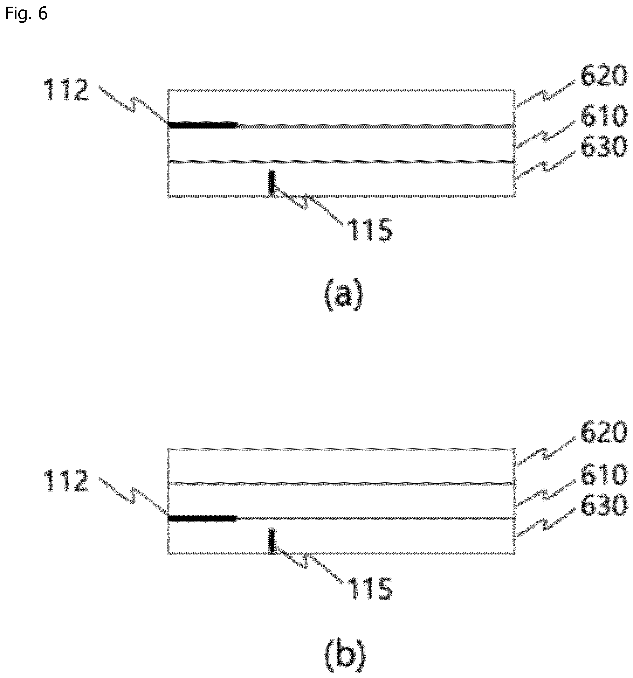

FIGS. 6A and 6B are exemplary diagrams for illustrating a laser marker and a non-attached area according to an embodiment of the present disclosure.

Referring to FIG. 6A, as described above, the non-attached area 112 may be disposed between the first layer 610 and the second layer 620. As another example, the non-attached area 112 may be disposed between the first layer 610 and the sealing layer 630, as shown in FIG. 6B.

The non-attached area 112 may maintain a state in which the first layer 610 and the sealing layer 630 are not attached, and thus, may serve as a handle that a user may easily grasp. The non-attached area 112 is an important part that initiates the removal of the sealing liner, and when a user pulls it by hand, force for removing the sealing liner may be transferred to the sealing layer 630. When a user pulls the non-attached area, the attached area of the first layer starts to move together with the sealing layer 630, whereby the container sealing liner 100 may be completely separated from the container in a single continuous action. Further, since the sealing layer 630 includes the laser marker 115, the first layer and the second layer are torn together from the starting point p1 where a fracture starts so that the container sealing liner may be separated.

For example, the container sealing liner 100 may be subject to an embossing process. An embossing process is a processing method of forming a pattern, such as latticework, including reliefs and depressions on the surface, which may adjust the physical properties of the sealing liner. This may improve the ease of opening of the sealing liner and may enable a user to easily remove the sealing liner.

The embossed part of the surface has non-uniform thickness, and has fine flexures. Such a structural change enables stress to be focused at a specific part when physical force is applied, resulting in easy tearing of the sealing liner. This is similar to the principle that a specific part of crumpled paper is torn first. Such a structure functions as guidance for easy tearing of the sealing liner. That is, the embossing serves as an important element to improve the ease of opening of the container sealing liner, and enables a user to easily open the container even with little effort.

The present disclosure has been described above with reference to its preferred embodiments. However, it will be understood by those of ordinary skill in the art that various modifications may be made without departing from the essential characteristics of the present disclosure. Therefore, the scope of the present disclosure should not be limited to the foregoing embodiments but should be construed to include various modifications within the scope equivalent to that defined in the claims.

### [Description of Reference Numerals]

100: container sealing liner
110, 410: first layer
120, 420: second layer

## Claims

1. A container sealing liner comprising:
a first layer for sealing an opening of a container, part of one surface of which is attached to the container; and
a second layer attached to the other surface of the first layer,
wherein the second layer comprises an attached area that is attached to the first layer and a non-attached area.

2. The container sealing liner of claim 1, wherein the non-attached area of the second layer is coated with ultraviolet-curable silicone resin (UV resin).

3. The container sealing liner of claim 1 or 2, wherein the non-attached area of the second layer includes a partially attached area, which is part of the non-attached area of the second layer that is not coated with ultraviolet-curable silicone resin so as to be attached to the first layer.

4. The container sealing liner of any one of claims 1 to 3, wherein the second layer includes a cutting line formed inwardly from a specific point on an edge of the second layer and a cutting guide line formed from the end point of the cutting line.

5. The container sealing liner of claim 4, wherein the cutting line includes a first cutting line formed from the outermost line of the second layer toward the center or in an inward direction, either straight or curved.

6. The container sealing liner of claim 5, wherein the cutting line includes a second cutting line connected to the end point of the first cutting line and formed at an angle of 90° to 150° with respect to the first cutting line.

7. The container sealing liner of claim 6, wherein the cutting line includes a third cutting line connected to the end point of the second cutting line and formed either in the same direction as the direction in which the first cutting line and the second cutting line run or in a reduced form of the outermost shape.

8. The container sealing liner of any one of claims 4 to 7, wherein the cutting guide line includes a first cutting guide line formed in the non-attached area and a second cutting guide line formed in the attached area.

9. The container sealing liner of any one of claims 1 to 8, wherein the second layer includes
a printing layer formed of at least one of polyethylene terephthalate (PET), biaxially oriented polypropylene (BOPP), polyolefin film, nylon film, and synthetic paper, and
a rigid film layer formed of at least one of polyester film, high-density polyethylene (HDPE) film, cast polypropylene (CPP) film, and nylon film.

10. The container sealing liner of any one of claims 1 to 9, wherein the second layer further includes a foam layer formed of a foamed olefin resin film or sheet in which a polyolefin resin is foamed.

11. The container sealing liner of any one of claims 1 to 10, wherein the first layer includes a sealing layer to be attached to the container, wherein the sealing layer includes a linear or V-shaped laser marker to guide cutting of the sealing layer.

12. The container sealing liner of claim 11, wherein, in a case where the laser marker is linear, one end is connected to the starting point, and in a case where the laser marker is V-shaped, the apex of the V is connected to the starting point.

13. The container sealing liner of any one of claims 1 to 12, wherein the first layer includes a sealing layer to be attached to the container, wherein the sealing layer includes an embossing structure, which is formed of a pattern, such as latticework, or curved lines, such as those resembling earthworms, including reliefs and depressions on the surface of the sealing layer.
